# EUROPÄISCHE PATENTSCHRIFT

(11) **EP 0 543 181 B1**
(45) Veröffentlichungstag und Bekanntmachung des Hinweises auf die Patenterteilung: **25.03.1998**
(21) Anmeldenummer: 92118235.8
(22) Anmeldetag: 24.10.1992
(51) Int. Cl.: H01F 27/14, G05D 23/24

(54) **Verfahren zur Trocknung der Feststoffisolationen von Transformatoren,insbesondere für Verteileranlagen, und Vorrichtung zur Durchführung dieses Verfahrens**
Method of drying the solid insulating material of transformers, especially transformers for distribution installations, and apparatus therefor
Procédé de séchage des isolants solides de transformateurs en particulier de transformateurs pour installation de distribution et dispositif de mise en oeuvre du procédé

(30) Priorität: 18.11.1991 CH 3363/91
(43) Veröffentlichungstag der Anmeldung: 26.05.1993
(73) Patentinhaber: MICAFIL Vakuumtechnik AG, CH-8048 Zürich (CH)
(72) Erfinder: Gmeiner, Paul, CH-8966 Lieli (CH); Schmidt, Sten, CH-8952 Schlieren (CH)
(74) Vertreter: Kaiser, Helmut, Dr.

(56) Entgegenhaltungen:
- DE-A- 3 927 964
- US-A- 4 369 353

## Beschreibung

### TECHNISCHES GEBIET

Bei der Erfindung wird ausgegangen von einem Verfahren nach dem einleitenden Teil von Patentanspruch 1. Die Erfindung betrifft zugleich auch eine Vorrichtung zur Durchführung des Verfahrens.

### STAND DER TECHNIK

Ein Verfahren der vorgenannten Art ist in DE-A-3 927 964 beschrieben. Bei diesem Verfahren werden die Unterspannungswicklungen der zu trocknenden Transformatoren kurzgeschlossen. Die Transformatoren werden sodann in einen evakuierbaren Behälter gebracht. Im Behälter werden die Ober- und Unterspannungswicklungen der Transformatoren mittels eines den Oberspannungswicklungen zugeführten niederfrequenten Wechselstroms aufgeheizt. Der niederfrequente Wechselstrom wird in einem Umrichter erzeugt. Die Transformatorwicklungen werden unter Atmosphärendruck zunächst auf eine Temperatur von ca. 110°C aufgeheizt und dabei vorgetrocknet. Sodann werden die Wicklungen auf eine Temperatur von ca. 150°C gebracht und bei Vakuum vollständig getrocknet. Die Temperaturen werden hierbei über den Wert des elektrischen Widerstands der Transformatorwicklungen berechnet. Zu diesem Zweck wird mit Hilfe des Umrichters Gleichstrom erzeugt. Durch Division von Spannung und Grösse dieses Gleichstroms wird so der elektrische Widerstand bestimmt.

Für eine möglichst gleichmässige Aufheizung der Transformatoren unterschiedlicher Bauart und Grösse benötigt dieses Verfahren jedoch entsprechend angepasste Stromversorgungen. Solche Stromversorgungen umfassen jeweils mindestens einen Frequenzumformer und Regelsysteme und sind vergleichsweise aufwendig. Zudem können schon geringfügige Abweichungen bestimmter Verfahrensparameter eine gleichmässige Aufheizung und damit die Trocknung der Feststoffisolation beeinträchtigen. Darüber hinaus kann bei der Trocknung mehrerer parallel geschalteter Transformatoren lediglich die mittlere Temperatur der Ober- und/oder der Unterspannungswicklungen aller Transformatoren ermittelt werden.

In US-A-4,369,353 sind ein Verfahren und eine Vorrichtung zum Trocknen der Feststoffisolationen eines Transformators beschrieben. Bei diesem Verfahren werden wechselweise eine mit Wechselstrom betriebene Heizquelle oder eine Widerstandsmessbrücke mit den Oberspannungswicklungen eines Transformators verbunden. Beim Anlegen des Wechselstroms werden die Oberspannungswicklungen aufgeheizt und dementsprechend die Feststoffisolationen getrocknet. Beim Anlegen der Widerstandsmessbrücke werden der ohmsche Widerstand und damit auch die Temperatur der Oberspannungswicklungen gemessen.

Dieses Verfahren arbeitet verhältnismässig langsam, da der Wechselstrom infolge der ständigen Kontrolle des Wicklungswiderstandes schon beim Vortrocknen der Wicklungen periodisch unterbrochen werden muss. Zudem wird bei diesem Verfahren nicht mit typischem Wechselstrom geheizt. Typischer Wechselstrom hat mit 50 oder 60 Hz eine vergleichsweise grosse Frequenz, bei der elektrische Überschläge an den Wicklungen beim Trocknen nicht mit Sicherheit auszuschliessen sind.

### KURZE DARSTELLUNG DER ERFINDUNG

Der Erfindung, wie sie in den Patentansprüchen 1 und 5 angegeben ist, liegt die Aufgabe zugrunde, ein Verfahren und eine zu dessen Durchführung vorgesehene Vorrichtung zu schaffen, welche es ermöglichen, Transformatoren unterschiedlicher Grösse und Bauart in einfacher und wirtschaftlicher Weise zu trocknen.

Das erfindungsgemässe Verfahren zeichnet sich dadurch aus, dass es eine besonders rasche und daher wirtschaftliche Trocknung der Feststoffisolationen der Transformatoren ermöglicht. Bei der Vortrocknung kann nämlich kontinuierlich mit dem niederfrequenten Wechselstrom geheizt werden. Ein Heruntersteuern des niederfreqenten Wechselstroms auf Gleichstrom entfällt, da die Wicklungstemperatur indirekt aus der Messung der Grösse und der Spannung des niederfrequenten Wechselstroms ermittelt wird. Zudem bietet das erfindungsgemässe Verfahren die Möglichkeit, Transformatoren unterschiedlicher Grössen und Bauarten besonders einfach und wirtschaftlich zu trocknen, indem die mittleren Temperaturen der Wicklungen dieser Transformatoren unabhängig voneinander überwacht werden.

Die Vorrichtung zur Durchführung des erfindungsgemässen Verfahrens kann vergleichsweise kostengünstig hergestellt und betrieben werden, da sie bei entsprechender Ausbildung bereits mit einer einzigen Stromversorgung die Feststoffisolationen von Transformatoren verschiedener Grössen und Bauarten zu trocknen vermag. An unterschiedliche Bauarten und Grössen der Transformatoren angepasste Stromversorgungen sind daher nicht erforderlich.

Bevorzugte Ausführungsbeispiele der Erfindung und die damit erzielbaren weiteren Vorteile werden nachfolgend anhand von Zeichnungen näher erläutert.

### KURZE BESCHREIBUNG DER ZEICHNUNGEN

In den Zeichnungen sind Ausführungsbeispiele der Erfindung vereinfacht dargestellt, und zwar zeigt:
- Fig.1: ein Prinzip- Schaltbild einer ersten Ausführungsform einer Vorrichtung zur Durchführung des erfindungsgemässen Verfahrens,
- Fig.2: ein detaillierter dargestelltes Schaltbild eines Teils der Ausführungsform gemäss Fig.1,
- Fig.3: ein Schaltbild eines Teils einer zweiten Ausführungsform der Vorrichtung zur Durchführung des erfindungsgemässen Verfahrens,
- Fig.4: ein Schaltbild eines Teils einer dritten Ausführungsform der Vorrichtung zur Durchführung des erfindungsgemässen Verfahren, und
- Fig.5: ein Schaltbild eines Teils einer vierten Ausführungsform der Vorrichtung zur Durchführung des erfindungsgemässen Verfahren.

### WEGE ZUR AUSFÜHRUNG DER ERFINDUNG

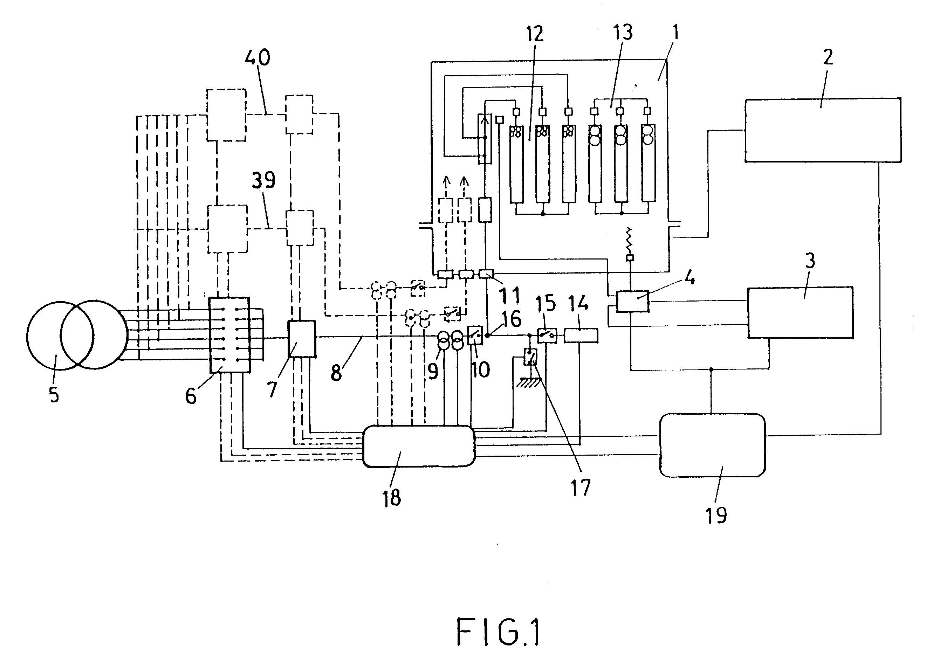

In der in Fig.1 dargestellten Ausführungsform der Vorrichtung zur Durchführung des erfindungsgemässen Verfahrens bezeichnet 1 einen Vakuum- Autoklaven, der an eine Evakuiervorrichtung 2 angeschlossen ist. Das Bezugszeichen 3 bezieht sich auf einen Isolieröl enthaltenden Vorratsbehälter, aus dem Isolieröl über eine Füllvorrichtung 4 in den Vakuum- Autoklaven 1 geführt werden kann. 5 bezeichnet einen Regeltransformator, der über eine Schaltvorrichtungen 6 auf einen Frequenzwandler 7 wirkt. Vom Frequenzwandlern 7 ausgehende dreiphasige Stromzuführungen 8 werden von Stromwandlern 9 überwacht und sind über eine Schaltvorrichtung 10 mittels Durchführungen 11 ins Innere des Vakuum- Autoklaven 1 geführt.

Im Vakuum- Autoklaven 1 sind schematisch die Oberspannungswicklungen 12 und die Unterspannungswicklungen 13 eines im Zuge des Herstellverfahrens noch zu trocknenden und noch mit Isolieröl zu füllenden, dreiphasig ausgebildeten Verteiltransformators dargestellt. Die Oberwicklungen 12 dieses Transformators sind ersichtlich als Stern geschaltet, wohingegen die Unterspannungswicklungen 13 an den Durchführungen kurzgeschlossen sind. Im Vakuum- Autoklaven 1 sind noch weitere zu trocknende und nachfolgend mit Isolieröl zu füllende Transformatoren vorgesehen, deren Oberspannungswicklungen über die Stromzuführungen 8 mit dem Ausgang des Frequenzwandlers 7 verbunden sind. Diese weiteren Transformatoren können von beliebiger Bauart und Grösse sein und sind aus Gründen der Übersichtlichkeit nicht dargestellt.

Ein Widerstandsmessgerät 14 ist über eine Schaltvorrichtung 15 mit den Stromzuführungen 8 und damit mit den Oberspannungswicklungen 12 verbindbar. Die zugehörigen Verbindungspunkte 16 sind für jede Phase jeweils zwischen der Schaltvorrichtung 10 und der entsprechenden Durchführung 11 auf der der Phase entsprechenden Stromzuführung 8 angeordnet. Die Verbindungspunkte 16 sind mit einer weiteren Schaltvorrichtung 17 verbunden, welche das Potential der Verbindungspunkte 16 und damit auch dasjenige der Oberspannungswicklungen 12 des Transformators und der Oberspannungswicklungen der weiteren im Vakuum- Autoklaven 1 vorgesehenen Transformatoren erdet.

Eine Regelvorrichtung 18 empfängt von den Stromwandlern 9 und dem Widerstandsmessgerät 14 ausgegebene Messsignale sowie Zustandsmeldungen von den Schaltvorrichtungen 6, 10, 15 und 17 und vom Frequenzwandler 7. Diese Daten können in der Regelvorrichtung 18 oder in einem übergeordneten Steuergerät 19 verarbeitet werden. Das Steuergerät 19 wirkt sowohl auf den Vorratsbehälter 3 und die Füllvorrichtung 4 als auch auf die Regelvorrichtung 18. Die hierbei sich ergebenden Daten dienen der Steuerung des nachfolgend beschriebenen erfindungsgemässen Verfahrens zur Herstellung der Transformatoren.

Bei der Durchführung des Verfahrens werden die ungetrockneten und noch isoliermittelfreien Transformatoren in den VakuumAutoklaven 1 gestellt. Sodann wird die Schaltvorrichtung 10 geöffnet und die Schaltvorrichtung 15 geschlossen, sodass nun mittels des Widerstandsmessgerätes 14 der elektrische Widerstand zumindest eines Teils der Oberspannungswicklungen eines oder mehrerer der Transformatoren bei Raumtemperatur gemessen werden kann. Der gemessene Widerstandswert wird in der Regelvorrichtung 18 gespeichert Das Widerstandsmessgerät 14 wird danach durch Öffnen der Schaltvorrichtung 15 von den Oberspannungswicklungen 12 getrennt und der Frequenzumformer 7 durch Schliessen der Schaltvorrichtung 10 mit den Oberspannungswicklungen 12 verbunden. Vom Frequenzumformer gelieferter Wechselstrom von wenigen Hertz Frequenz heizt nun die unter atmosphärischem Druck oder leichtem Unterdruck im Vakuum- Autoklaven befindlichen Oberspannungswicklungen 12 und damit auch die Unterspannungswicklungen der Transformatoren auf eine mittlere Temperatur von ca. 100°C auf. Diese Temperatur wird indirekt durch Messung des Heizstromes mittels der Stromwandler 9 sowie der Spannung des Heizstromes überwacht. Durch entsprechende Anpassung des Heizstromes wird die Temperatur konstant auf ca. 100°C gehalten, und dabei die Feststoffisolation vorgetrocknet. Sodann werden die Transformatoren bei einer über die Dauer und Grösse des niederfrequenten Wechselstromes ermittelten mittleren Temperatur der Wicklungen 12, 13 von ca. 130°C unter Vakuum, welches über die Evakuiervorrichtung 2 erzeugt wird, unter Abgabe von Restfeuchtigkeit vollständig getrocknet.

Um hierbei ein zu starkes Aufheizen der Wicklungen 12, 13 mit Sicherheit zu verhindern, wird unmittelbar nach Erreichen einer vorgegebenen mittleren Temperatur von Ober- und Unterspannungswicklung zusätzlich auch die mittlere Temperatur zumindest eines Teils der Oberspannungswicklungen 12 ermittelt. Dies wird mit der Vorrichtung nach Fig. 1 dadurch erreicht, dass in Serie zu zumindest einem Teil der Oberspannungswicklungen 12 das Widerstandsmessgerät 14 schaltbar ist. Vor Durchführung der Widerstandsmessung wird zunächst der niederfrequente Wechselstrom durch Öffnen der Schaltvorrichtung 10 unterbrochen. Sodann werden die Iberspannungswicklungen 12 durch Schliessen der Schaltvorrichtung 17 vorübergehend geerdet, und werden so störende Restspannungen von den Oberspannungswicklungen 12 entfernt. Danach wird die Schaltvorrichtung 15 geschlossen und wird die Messung des elektrischen Widerstandes der Oberspannungswicklungen 12 durchgeführt.

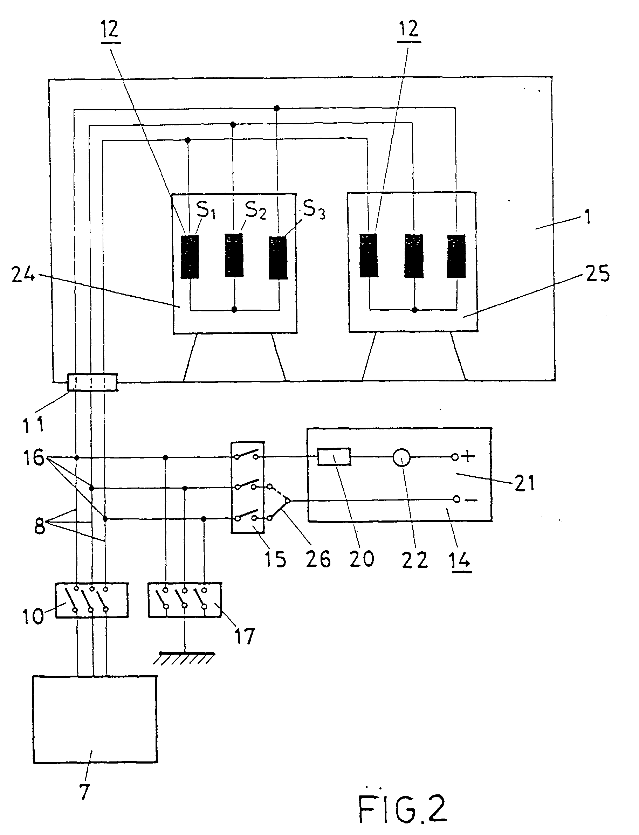

Aus Fig. 2 ist ersichtlich, wie eine solche Messung durchgeführt werden kann. Aus dieser Figur ist zu entnehmen, dass das Widerstandsmessgerät 14 in Serie geschaltet mindestens einen Messwiderstand 20 , mindestens eine Gleichstromquelle 21 und mindestens ein Strommessgerät 22 aufweist. Aus dem hierbei gemessenen Strom wird in der Regelvorrichtung 18 bzw. im Steuergerät 19 der elektrische Widerstand des vermessenen Teils der Oberspannungswicklungen 12 und hieraus durch Vergleich mit dem zuvor bei Raumtemperatur ermittelten und gespeicherten Wert des entsprechenden Teils der Oberspannungswicklungen 12 die mittlere Temperatur der Oberspannungswicklungen bestimmt.

Um eine besonders schonende Trocknung zu ermöglichen, kann zusätzlich aus der mittleren Temperatur der Ober- und der Unterspannungswicklungen und der mittleren Temperatur der Oberspannungswicklungen die mittlere Temperatur der in Fig. 2 nicht dargestellten, kurzgeschlossenen Unterspannungswicklungen ermittelt werden.

Die nach dem erfindungsgemässen Verfahren ermittelten mittleren Temperaturen der Ober- und/oder der Unterspannungswicklungen der zu trocknenden Transformatoren können in der Regelvorrichtung 18 zur Lösung zusätzlicher Steuer- und Regelaufgaben weiterverarbeitet werden.

Sollte es sich bei dieser Temperaturmessung herausstellen, dass die angestrebten mittleren Temperaturen der Oberspannungs- und der Unterspannungswicklungen 12, 13 noch nicht erreicht sind, so wird nach Abtrennen des Widerstandsmessgerätes 14 und Schliessen der Schaltvorrichtung 10 der Aufheizvorgang fortgesetzt. Ist hingegen mindestens eine der angestrebten mittleren Temperaturen der Wicklungen überschritten, so bleiben die Stromzuführungen 8 zu den Oberspannungswicklungen 12 unterbrochen und wird Heizstrom erst dann wieder zugeführt, wenn die über das Widerstandsmessgerät 14 ermittelte mittlere Temperatur der Ober- und/oder der Unterspannungswicklung wieder unter den angestrebten Wert gefallen ist.

Wie aus Fig. 2 ersichtlich ist, kann bei dreiphasigen Transformatoren 24, 25 mit oberspannungsseitig vorgesehenen Phasenwicklungen S₁, S₂ und S₃ der elektrische Widerstand der lediglich zwei Phasen zugeordneten Wicklungen, beispielsweise S₁ und S₃, gemessen und hieraus die mittlere Temperatur der Oberspannungswicklungen 12 gleichartig aufgebauter Transformatoren 24 und 25 ermittelt werden. Es kann aber auch der elektrische Widerstand der allen Phasen zugeordneten Wicklungen, nämlich S₁, S₂ und S₃, gemessen und hieraus die mittlere Temperatur der Oberspannungswicklungen 12 ermittelt werden. Zu diesem Zweck könnem beispielsweise die beiden Wicklungen S₁ und S₃ über einen zusätzlich vorgesehenen Umschalter 26 zueinander parallel geschaltet und die Parallelschaltung in Serie zur Wicklung S₃ geschaltet werden.

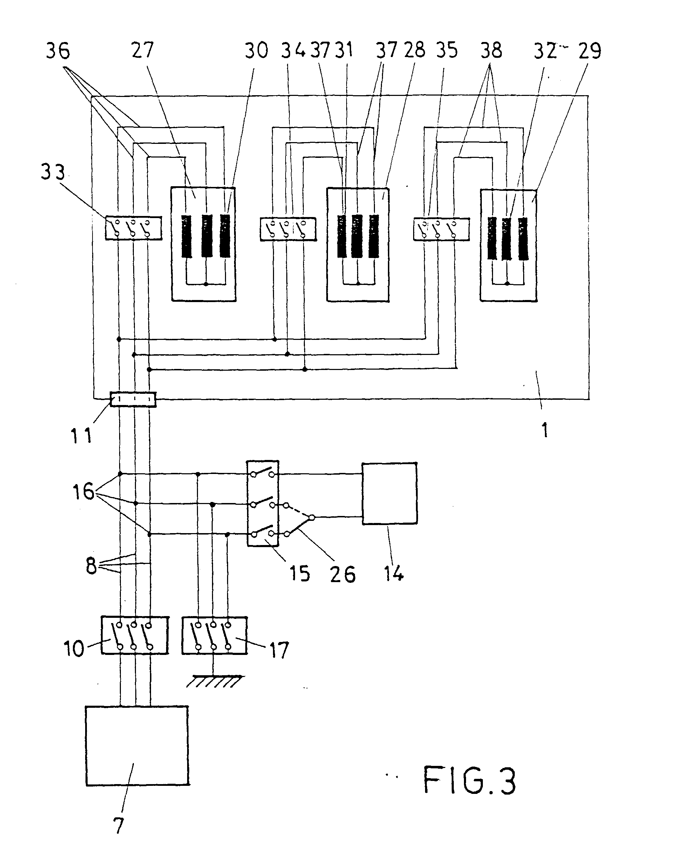

In Fig.3 ist eine weitere Ausführungsform einer Vorrichtung zur Durchführung des erfindungsgemässen Verfahrens angegeben, bei der entsprechend der Ausführungsform gemäss den Figuren 1 und 2 wirkende Teile auch entsprechend bezeichnet sind. Diese Ausführungsform weist im Vakuum- Autoklaven 1 Transformatoren 27, 28 und 29 mit Oberspannungswicklungen 30, 31 und 32 sowie Schaltvorrichtungen 33, 34 und 35 auf, welche jeweils in Stromzuführungen 36, 37, 38 der einzelnen Transformatoren 27, 28, 29 vorgesehen sind.

Die dargestellten Transformatoren 27, 28 und 29 können von unterschiedlicher Bauart und Grösse sein und können dennoch mit lediglich einer einzigen Stromversorgung rasch und problemlos getrocknet werden. Dies wird dadurch erreicht, dass durch geeignetes Betätigen der Schaltvorrichtungen zunächst bei Raumtemperatur die elektrischen Widerstände der Oberspannungswicklungen gemessen werden. Soll zum Beispiel der Widerstand der Oberspannungswicklung 31 des Transformators 28 bei Raumtemperatur gemessen werden, so werden die Schaltvorrichtungen 10, 17, 33 und 35 geöffnet und die Schaltvorrichtungen 15 und 34 geschlossen. Zum nachfolgenden Aufheizen mit niederfrequentem Wechselstrom werden die Schaltvorrichtungen 15 und 17 geöffnet und die übrigen Schaltvorrichtungen geschlossen. Sobald die über die Strommessung in der Regelvorrichtung 18 oder in dem Steuergerät 19 berechnete mittlere Temperatur der Wicklungen der aufgeheizten Transformatoren 27, 28, 29 einen vorgegebenen Grenzwert überschreitet, wird der Heizstrom durch Öffnen der Schaltvorrichtung 10 unterbrochen und werden nach vorübergehendem Erden der Oberspannungswicklungen 30, 31 und 32 und nach entsprechender Betätigung der Schaltvorrichtungen 15, 33, 34 und 35 der Reihe nach die elektrischen Widerstände der Oberspannungswicklungen gemessen. Stellt es sich hierbei heraus, dass die mittlere Temperatur der Oberspannungswicklung und/oder die mittlere Temperatur der Unterspannungswicklung eines der Transformatoren, z.B. 28, nicht mehr weiter erhöht werden darf, hingegen die Ober- und/oder Unterspannungswicklungen der verbleibenden Transformatoren, z.B. 27, 29, aber noch nicht ausreichend aufgeheizt sind, so werden die Schaltvorrichtungen 15 und 34 geöffnet und werden durch Schliessen der Schaltvorrichtungen 10, 33 und 35 nachfolgend lediglich nur noch die verbleibenden Transformatoren, z.B. 27 und 29, aufgeheizt.

Hierdurch ist es möglich, mit lediglich einer einzigen Stromversorgung mehrere Transformatoren unterschiedlicher Grössen und Bauarten zu trocknen und nachfolgend mit Isoliermittel zu füllen. Im Gegensatz dazu benötigen Vorrichtungen nach dem Stand der Technik für die unterschiedlich bemessenen Transformatoren auch unterschiedliche Stromversorgungen. In Fig.1 sind solche beim Stand der Technik erforderlichen Stromversorgungen 39, 40 gestrichelt eingetragen.

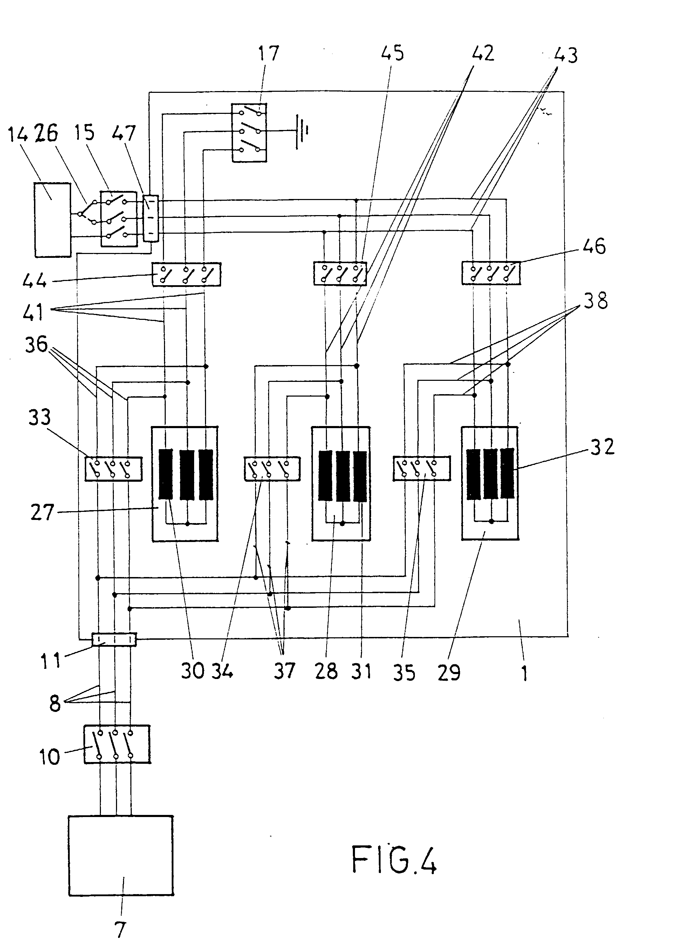

Bei der in Fig.4 dargestellten Ausführungsform der Vorrichtung zur Durchführung des erfindungsgemässen Verfahrens ist das Widerstandsmessgerät 14 über eine vakuumdichte Messdurchführung 47 und jeweils eine von drei Messleitungen 41, 42, 43 mit einer der Oberspannungswicklungen 30, 31, 32 verbindbar. In den Messleitungen 41, 42 bzw. 43 ist jeweils eine von drei Schaltvorrichtungen 44, 45 und 46 angeordnet.

Hierdurch lässt sich gegenüber der Ausführungsform gemäss Fig.3 zusätzlich erreichen, dass die mittlere Temperatur der Oberspannungswicklung eines der Transformatoren 27, 28, 29 gemessen werden kann, ohne dass die Stromzufuhr zu den übrigen Transformatoren unterbrochen werden muss. Soll während des Trocknens der Transformatoren 27, 28 und 29 beispielsweise die mittlere Temperatur der Oberspannungswicklung 31 des Transformators 28 gemessen werden, so wird durch Öffnen der Schaltvorrichtung 34 zunächst die Stromzufuhr zur Oberspannungswicklung 31 unterbrochen und wird diese Wicklung sodann bei geschlossenen Schaltvorrichtungen 17 und 45 geerdet. Hierbei sind die Schaltvorrichtungen 15, 44 und 46 geöffnet. Anschliessend wird die Schaltvorrichtung 17 geöffnet und die Schaltvorrichtung 15 geschlossen. Das Widerstandsmessgerät ermittelt nun je nach Stellung des Umschalters 26 die mittlere Temperatur der Oberspannungswicklung 31 oder eines Teils davon. Die Oberspannungswicklungen 30 und 32 werden während dieser Temperaturmessung weiter mit dem niederfrequenten Wechselstrom geheizt.

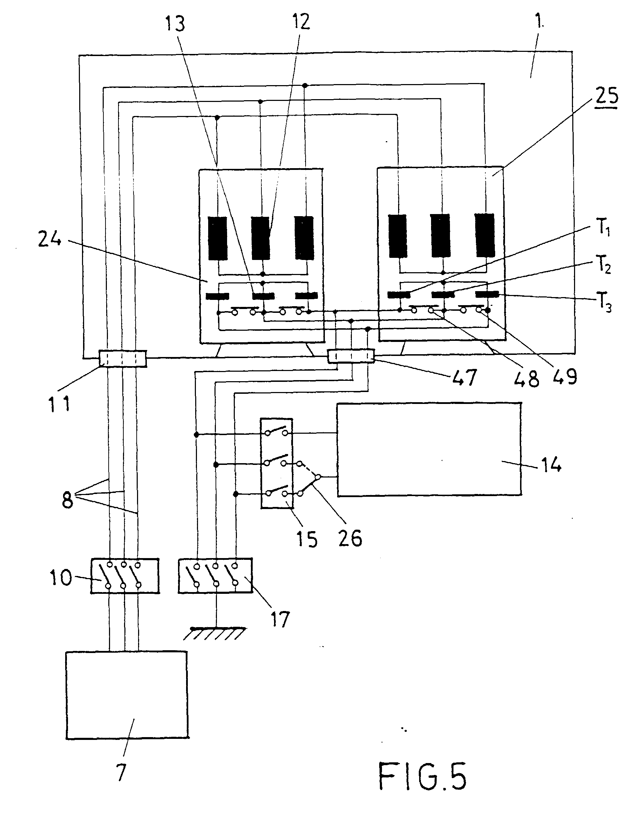

In Fig.5 ist eine Ausführungsform einer Vorrichtung zur Durchführung des erfindungsgemässen Verfahrens angegeben, bei der entsprechend der Ausführungsform gemäss den Figuren 1 und 2 wirkende Teile auch entsprechend bezeichnet sind. Diese Ausführungsform weist im Vakuum- Autoklaven 1 Transformatoren 24 und 25 mit Oberspannungswicklungen 12 und Unterspannungswicklungen 13 auf. Die Unterspannungswicklungen 13 jedes Transformators 24, 25 enthalten Phasenwicklungen T₁, T₂, T₃, welche über Schaltvorrichtungen 48, 49 miteinander verbunden oder voneinander getrennt werden können. Der Eingang des Widerstandsmessgerätes ist über den Umschalter 26, die Schaltvorrichtung 15 und die vakuumdichte Messdurchführung 47 an die im Inneren des Vakuumautoklaven 1 befindlichen Anschlüsse der Unterspannungswicklungen 13 der Transformatoren 24 und 25 geführt. Die Schaltvorrichtungen 48 und 49 stehen über nicht dargestellte Datenverbindungen mit der in Fig. 5 nicht dargestellten Regelvorrichtung 18 bzw. dem in dieser Figur ebenfalls nicht dargestellten Steuergerät 19 in Wirkverbindung.

Beim Aufheizen der Wicklungen 12, 13 bleiben bei dieser Ausführungsform der Erfindung die vom Steuergerät 19 überwachten Schaltvorrichtungen 48, 49 geschlossen, so dass in den Unterspannungswicklungen 13 ein Kurzschlussstrom fliessen kann. Soll nun der elektrische Widerstand und damit die mittlere Temperatur der Unterspannungswicklung ermittelt werden, so wird zunächst der niederfrequente Wechselstrom durch Öffnen der Schaltvorrichtung 10 unterbrochen und werden sodann die Unterspannungswicklungen 13 durch kurzzeitiges Schliessen der Schaltvorrichtungen 17 vorübergehend geerdet. Danach werden die Schaltvorrichtungen 48, 49 geöffnet, durch Schliessen der Schaltvorrichtung 15 und des Umschalters 26 zwei, z.B. T₁ und T₃, der Phasenwicklungen T₁, T₂, T₃ der Unterspannungswicklung 13 in Serie zum Widerstandsmessgerät 14 gelegt und der elektrische Widerstand dieser zwei Phasenwicklungen ermittelt.

In weiterer Fortbildung der Erfindung ist es auch möglich, die mittlere Temperatur sowohl der Oberspannungswicklung als auch diejenige der Unterspannungswicklungen mittels einer elektrischen Widerstandsmessung direkt zu ermitteln. Zu diesem Zweck können zwei Widerstandsgeräte vorgesehen sein, kann aber durch eine geeignete Umschaltvorrichtung auch dafür gesorgt sein, dass diese Messaufgabe mit nur einem - wechselweise an die Ober- und an die Unterspannungswicklung gelegten - Widerstandsmessgerät ausgeführt wird.

Darüber hinaus kann die Temperatur der Oberspannungswicklung unter Beibehalt des Heizstromes auch direkt aus der Messung des Wicklungsstromes und der Wicklungsspannung ermittelt werden. Nach Erreichen der mittleren Temperatur der Wicklungen wird der niederfrequente Wechselstrom im Frequenzumformer 7 auf tiefe Frequenzen, beispielsweise 0,1 bis 0,01 Hz, heruntergefahren. Durch geeignete Betätigung der Schaltvorrichtungen, etwa durch Öffnen der Schaltvorrichtungen 34 und 35 bei der Ausführungsform gemäss Fig.3, wird die Oberspannungswicklung, beispielsweise des Transformator 27, von den Oberspannungswicklungen der übrigen Transformatoren, beispielsweise 28, 29, getrennt. Der Wechselstrom tiefer Frequenz heizt nun nur noch die Oberspannungswicklung des Transformators 27 auf. Wegen der tiefen Frequenz des Heizstroms wird hierbei überwiegend nur die Oberspannungswicklung aufgeheizt. Durch entsprechende Betätigung der Schaltvorrichtungen kann entsprechend auch die Oberspannungswicklung eines anderen der Transformatoren individuell aufgeheizt werden. Über eine Messung des Heizstroms und der Heizspannung und nachfolgende Berechnung des elektrischen Widerstandes der Wicklung kann während des Aufheizens leicht die mittlere Temperatur der Oberspannungswicklung ermittelt und dementsprechend der Heizstrom geregelt werden.

## Patentansprüche

1. Verfahren zur Trocknung der Feststoffisolationen von Transformatoren (24, 25; 27, 28, 29), insbesondere für Verteileranlagen, mit zueinander parallelgeschalteten Oberspannungswicklungen (12; S₁, S₂, S₃; 30, 31, 32) und mit kurzgeschlossenen Unterspannungswicklungen (13), bei dem die Wicklungen mittels eines in den Oberspannungswicklungen geführten niederfrequenten Wechselstromes bei atmosphärischem Druck oder leichtem Unterdruck auf eine mittlere erste Temperatur aufgeheizt und bei dieser Temperatur vorgetrocknet werden und die vorgetrockneten Wicklungen sodann unter Vakuum bei einer höheren mittleren zweiten Temperatur vollständig getrocknet werden, und bei dem über eine Messung des elektrischen Widerstands der Ober- und/oder Unterspannungswicklungen eines der Transformatoren die mittlere zweite Temperatur überwacht wird, dadurch gekennzeichnet,
- dass die mittlere erste Temperatur indirekt durch Messung von Strom und Spannung des niederfrequenten Wechselstroms ermittelt und überwacht wird,
- dass nach Erreichen der mittleren zweiten Temperatur der in den Oberspannungswicklungen eines ersten (24; 27) der Transformatoren geführte niederfrequente Wechselstrom unterbrochen oder auf tiefe Frequenzen heruntergefahren wird, und
- dass der elektrische Widerstand der Oberspannungswicklungen des ersten Transformators (24, 27) sodann bei unterbrochenem niederfrequentem Wechselstrom oder durch Messung von Strom und Spannung des niederfrequenten Wechselstroms tiefer Frequenz gemessen wird.

2. Verfahren nach Anspruch 1, dadurch gekennzeichnet, dass während der Messung des elektrischen Widerstands die Oberspannungswicklungen mindestens eines zweiten (25; 28) der übrigen Transformatoren mit dem niederfrequenten Wechselstrom weitergeheizt werden.

3. Verfahren nach einem der Ansprüche 1 oder 2, dadurch gekennzeichnet, dass vor dem Aufheizen mit dem niederfrequenten Wechselstrom zunächst der elektrische Widerstand der Ober- und/oder Unterspannungswicklungen gemessen wird.

4. Verfahren nach einem der Ansprüche 1 bis 3, dadurch gekennzeichnet, dass der niederfrequente Wechselstrom kurzzeitig unterbrochen wird, dass während des Unterbrechens des niederfrequenten Wechselstromes die Kurzschlusskreise der kurzgeschlossenen Unterspannungswicklungen (13) vorübergehend geöffnet werden, und dass während des vorübergehenden Öffnens der Kurzschlusskreise der elektrische Widerstand zumindest eines Teils der Unterspannungswicklungen gemessen wird.

5. Vorrichtung zur Trocknung der Feststoffisolationen von Transformatoren (24, 25; 27, 28, 29), insbesondere für Verteileranlagen, mit zueinander parallelgeschalteten Oberspannungswicklungen (12; S₁, S₂, S₃; 30, 31, 32) und mit kurzgeschlossenen Unterspannungswicklungen (13) mit
einem Vakuum-Autoklaven (1) zur Aufnahme der Transformatoren,
einem Frequenzwandler (7) zum Liefern von niederfrequentem Wechselstrom an die Oberspannungswicklungen und zum Aufheizen der Wicklungen,
einem Stromwandler (9) zum Erfassen der Grösse des vom Frequenzwandler (7) gelieferten niederfrequenten Wechselstroms,
einer Vorrichtung zum Erfassen der Spannung des vom Frequenzwandler (7) gelieferten Wechselstroms,
einer Temperaturüberwachungsvorrichtung, die aus den erfassten Signalen von Strom und Spannung eine beim Vortrocknen der Wicklungen bei atmosphärischem Druck oder leichtem Unterdruck zu haltende mittlere erste Temperatur und eine beim vollständigen Trocknen der vorgetrockneten Wicklungen unter Vakuum zu haltende mittlere zweite Temperatur ermittelt und überwacht, und mit
einer Regel- und Steuervorrichtung (18,19) zum Anpassen des niederfrequenten Wechselstroms an die mittlere erste und an die mittlere zweite Temperatur,
dadurch gekennzeichnet,
dass zwischen einem den niederfrequenten Wechselstrom führenden Ausgang des Frequenzwandlers (7) und einer mit dem niederfrequenten Wechselstrom beaufschlagbaren Stromzuführung (8; 36, 37, 38) der Oberspannungswicklungen eine erste Schaltvorrichtung (10) angeordnet ist,
dass in Serie zu mindestens einem Teil der Ober- und/oder Unterspannungswicklungen ein Widerstandsmessgerät (14) schaltbar ist, und
dass zwischen dem Widerstandsmessgerät (14) und der mit dem niederfrequenten Wechselstrom beaufschlagbaren Stromzuführung (8; 36, 37, 38) der Oberspannungswicklungen (12; 30, 31, 32) oder einer mit den Ober- oder Unterspannungswicklungen verbindbaren, vakuumdichten Messdurchführung (47) eine zweite Schaltvorrichtung (15), und zwischen Stromzuführungen zu den in Serie zum Widerstandsmessgerät (14) angeordneten Ober- und/oder Unterspannungswicklungen und Erde eine dritte Schaltvorrichtung (17) angeordnet ist.

6. Vorrichtung nach Anspruch 5, dadurch gekennzeichnet, dass in den Stromzuführungen (36, 37, 38) zu den Oberspannungswicklungen (30, 31, 32) der einzelnen Transformatoren (27, 28 29) jeweils mindestens eine von mehreren vierten Schaltstellen (33, 34, 35) vorgesehen ist (Fig.3 und 4).

7. Vorrichtung nach Anspruch 6, dadurch gekennzeichnet, dass das Widerstandsmessgerät (14) an eine allen Transformatoren (27, 28, 29) gemeinsame Stromzuführung (8) schaltbar ist (Fig.3).

8. Vorrichtung nach Anspruch 7, dadurch gekennzeichnet, dass das Widerstandsmessgerät (14) über jeweils eine von mehreren fünften Schaltvorrichtungen (44, 45, 46) mit jeweils einer lediglich auf die Oberspannungswicklung (z.B. 31) eines einzelnen der Transformatoren (z.B. 28) wirkenden Stromzuführung (z.B. 37) verbindbar ist (Fig.4).

9. Vorrichtung nach Anspruch 8, dadurch gekennzeichnet, dass in den Kurzschlusskreisen der kurzgeschlossenen Unterspannungswicklungen (13) mindestens eine erste Schaltvorrichtung (48, 49) angeordnet ist, und dass das mindestens eine Widerstandsmessgerät (14) über mindestens eine zweite Schaltvorrichtung (15) mit den Unterspannungswicklungen (13) der Transformatoren (24, 25) verbindbar ist (Fig.5).

## Claims

1. Method for drying solid insulation for transformers (24, 25; 27, 28, 29), in particular for distribution systems, having mutually parallel-connected high-voltage windings (12; S₁, S₂, S₃; 30, 31, 32) and having short-circuited low-voltage windings (13), in the case of which the windings are heated to a mean first temperature at atmospheric pressure or at a slightly reduced pressure by means of a low-frequency alternating current carried in the high-voltage windings, and are initially dried at this temperature, and the initially dried windings are then completely dried in a vacuum at a higher mean second temperature, and in the case of which the mean second temperature is monitored by measuring the electrical resistance of the high and/or low-voltage windings of one of the transformers, characterized
- in that the mean first temperature is determined and monitored indirectly by measuring the current and voltage of the low-frequency alternating current,
- in that, after reaching the mean second temperature, the low-frequency alternating current carried in the high-voltage windings of a first (24; 27) of the transformers is interrupted or is reduced to very low frequencies, and
- in that the electrical resistance of the high-voltage windings of the first transformer (24, 27) is then measured with the low-frequency alternating current interrupted or by measuring the current and voltage of the low-frequency alternating current at very low frequency.

2. Method according to Claim 1, characterized in that, while the electrical resistance is being measured, the high-voltage windings of at least a second (25; 28) of the other transformers are heated further by the low-frequency alternating current.

3. Method according to one of Claims 1 or 2, characterized in that, before being heated by the low-frequency alternating current, the electrical resistance of the high and/or low-voltage windings is measured first of all.

4. Method according to one of Claims 1 to 3, characterized in that the low-frequency alternating current is briefly interrupted, in that the short circuits of the short-circuited low-voltage windings (13) are temporarily opened while the low-frequency alternating current is interrupted, and in that the electrical resistance of at least a part of the low-voltage windings is measured during the temporary opening of the short circuits.

5. Apparatus for drying solid insulation for transformers (24, 25; 27, 28, 29), in particular for distribution systems, having mutually parallel-connected high-voltage windings (12; S₁, S₂, S₃; 30, 31, 32) and having short-circuited low-voltage windings (13) with a vacuum autoclave (1) for accommodating the transformers, a frequency converter (7) for supplying low-frequency alternating current to the high-voltage windings and for heating the windings, a current transformer (9) for detecting the magnitude of the low-frequency alternating current supplied by the frequency converter (7), an apparatus for detecting the voltage of the alternating current supplied by the frequency converter (7), a temperature monitoring apparatus, which uses the detected signals for the current and voltage to determine and monitor a mean first temperature (which is to be maintained at atmospheric pressure or at a slightly reduced pressure during initial drying of the windings) and a mean second temperature (which is to be maintained during complete drying of the initially dried windings in a vacuum), and having a control apparatus (18, 19) for matching the low-frequency alternating current to the mean first temperature and to the mean second temperature, characterized in that a first switching apparatus (10) is arranged between an output (which carries the low-frequency alternating current) of the frequency converter (7) and an electrical power supply (8; 36, 37, 38) (to which the low-frequency alternating current can be applied) for the high-voltage windings, in that a resistance test set (14) can be connected in series with at least some of the high and/or low-voltage windings, and in that a second switching apparatus (15) is arranged between the resistance test set (14) and the electrical power supply (8; 36, 37, 38) (to which the low-frequency alternating current can be applied) for the high-voltage windings (12; 30, 31, 32) or a vacuum-tight measurement bushing (47) which can be connected to the high or low-voltage windings, and a third switching apparatus (17) is arranged between earth and the electrical power supplies to the high and/or low-voltage windings which are arranged in series with the resistance test set (14).

6. Apparatus according to Claim 5, characterized in that at least one of a plurality of fourth switching points (33, 34, 35) is in each case provided in the electrical power supplies (36, 37, 38) to the high-voltage windings (30, 31, 32) of the individual transformers (27, 28, 29) (Fig. 3 and 4).

7. Apparatus according to Claim 6, characterized in that the resistance test set (14) can be connected to an electrical power supply (8) which is common to all the transformers (27, 28, 29) (Fig. 3).

8. Apparatus according to Claim 7, characterized in that the resistance test set (14) can be connected via in each case one of a plurality of fifth switching apparatuses (44, 45, 46) to in each case one electrical power supply (for example 37) which acts only on the high-voltage winding (for example 31) of an individual one of the transformers (for example 28) (Fig. 4).

9. Apparatus according to Claim 8, characterized in that at least one first switching apparatus (48, 49) is arranged in the short circuits of the short-circuited low-voltage windings (13), and in that at least one resistance test set (14) can be connected via at least one second switching apparatus (15) to the low-voltage windings (13) of the transformers (24, 25) (Fig. 5).

## Revendications

1. Procédé pour le séchage des isolants solides de transformateurs (24, 25; 27, 28, 29), en particulier pour des installations de distribution, avec des enroulements haute tension (12; S₁, S₂, S₃; 30, 31, 32) raccordés en parallèle l'un à l'autre et avec des enroulements basse tension (13) mis en court-circuit, dans lequel les enroulements sont chauffés à une première température moyenne au moyen d'un courant alternatif à basse fréquence conduit dans les enroulements haute tension, à la pression atmosphérique ou sous une légère dépression, et sont préséchés à cette température et les enroulements préséchés sont ensuite complètement séchés sous vide à une deuxième température moyenne plus élevée, et dans lequel la deuxième température moyenne est surveillée par une mesure de la résistance électrique des enroulements haute et/ou basse tension de l'un des transformateurs, caractérisé en ce que
- la première température moyenne est déterminée et surveillée indirectement par la mesure de l'intensité et de la tension du courant alternatif à basse fréquence, en ce que
- après avoir atteint la deuxième température moyenne, le courant alternatif à basse fréquence conduit dans les enroulements haute tension d'un premier (24; 27) des transformateurs est interrompu ou est dégradé à de faibles fréquences, et en ce que
- la résistance électrique des enroulements haute tension du premier transformateur (24; 27) est ensuite mesurée avec le courant alternatif à basse fréquence interrompu ou par mesure de l'intensité et de la tension du courant alternatif à basse fréquence de fréquence faible.

2. Procédé suivant la revendication 1, caractérisé en ce que les enroulements haute tension d'au moins un deuxième (25; 28) des autres transformateurs continuent à être chauffés avec le courant alternatif à basse fréquence pendant la mesure de la résistance électrique.

3. Procédé suivant l'une quelconque des revendications 1 ou 2, caractérisé en ce qu'avant le chauffage avec le courant alternatif à basse fréquence, on mesure d'abord la résistance électrique des enroulements haute et/ou basse tension.

4. Procédé suivant l'une quelconque des revendications 1 à 3, caractérisé en ce que le courant alternatif à basse fréquence est brièvement interrompu, en ce que les circuits de court-circuit des enroulements basse tension (13) mis en court-circuit sont temporairement ouverts pendant l'interruption du courant alternatif à basse fréquence, et en ce que la résistance électrique d'au moins une partie des enroulements basse tension est mesurée pendant l'ouverture temporaire des circuits de court-circuit.

5. Dispositif pour le séchage des isolants solides de transformateurs (24, 25; 27, 28, 29), en particulier pour des installations de distribution, avec des enroulements haute tension (12; S₁, S₂, S₃; 30, 31, 32) raccordés en parallèle l'un à l'autre et avec des enroulements basse tension (13) mis en court-circuit, avec un autoclave sous vide (1) destiné à recevoir les transformateurs, avec un convertisseur de fréquence (7) pour fournir un courant alternatif à basse fréquence aux enroulements haute tension et pour chauffer les enroulements, avec un transformateur de courant (9) pour mesurer l'intensité du courant alternatif à basse fréquence fourni par le convertisseur de fréquence (7), avec un dispositif pour mesurer la tension du courant alternatif fourni par le convertisseur de fréquence (7), avec un dispositif de surveillance de la température, qui détermine et surveille, à partir des signaux mesurés d'intensité et de tension, une première température moyenne à respecter lors du préséchage des enroulements à la pression atmosphérique ou sous une légère dépression et une deuxième température moyenne à respecter lors du séchage complet sous vide des enroulements préséchés, et avec un dispositif de régulation (18) et de commande (19) pour adapter le courant alternatif à basse fréquence à la première température moyenne et à la deuxième température moyenne, caractérisé en ce qu'un premier commutateur (10) est disposé entre une sortie du convertisseur de fréquence (7) conduisant le courant alternatif à basse fréquence et une alimentation électrique (8; 36, 37, 38) des enroulements haute tension, pouvant être soumise au courant alternatif à basse fréquence, en ce qu'un appareil de mesure de résistance (14) peut être raccordé en série avec au moins une partie des enroulements haute et/ou basse tension, et en ce qu'un deuxième commutateur (15) est monté entre l'appareil de mesure de résistance (14) et l'alimentation électrique (8; 36, 37, 38) des enroulements haute tension (12; 30, 31, 32), pouvant être soumise à la mesure alternative à basse fréquence, ou une traversée de courant étanche au gaz (47) pouvant être raccordée aux enroulements haute et/ou basse tension, et un troisième commutateur (17) est disposé entre des alimentations électriques vers les enroulements haute et/ou basse tension disposés en série avec l'appareil de mesure de résistance (14) et la terre.

6. Dispositif suivant la revendication 5, caractérisé en ce qu'il est prévu au moins un de plusieurs quatrièmes points de commutation (33, 34, 35) dans chacune des alimentations électriques (36, 37, 38) vers les enroulements haute tension (30, 31, 32) des divers transformateurs (27, 28, 29) (Fig. 3 et 4).

7. Dispositif suivant la revendication 6, caractérisé en ce que l'appareil de mesure de résistance (14) peut être raccordé à une alimentation électrique (8) commune à tous les transformateurs (27, 28, 29) (Fig. 3).

8. Dispositif suivant la revendication 7, caractérisé en ce que l'appareil de mesure de résistance (14) peut être raccordé, respectivement par un de plusieurs cinquièmes commutateurs (44, 45, 46), à une alimentation électrique (par exemple 37) agissant uniquement sur l'enroulement haute tension (par exemple 31) d'un seul des transformateurs (par exemple 28) (Fig. 4).

9. Dispositif suivant la revendication 8, caractérisé en ce qu'au moins un premier commutateur (48, 49) est disposé dans les circuits de court-circuit des enroulements basse tension (13) en court-circuit, et en ce qu'au moins l'appareil de mesure de résistance (14) peut être raccordé, par au moins un deuxième commutateur (15), aux enroulements basse tension (13) des transformateurs (24, 25) (Fig. 5).
